**Europäisches Patentamt**

**European Patent Office**

**Office européen des brevets**

(19)

(11) Veröffentlichungsnummer : **0 335 109 B1**

(12) # EUROPÄISCHE PATENTSCHRIFT

(45) Veröffentlichungstag der Patentschrift :
03.06.92 Patentblatt 92/23

(51) Int. Cl.$^5$ : **B29D 23/22, F16L 47/02**

(21) Anmeldenummer : **89103228.6**

(22) Anmeldetag : **24.02.89**

(54) **Verfahren zur Herstellung eines Heizelements.**

(30) Priorität : **30.03.88 DE 3810845**

(43) Veröffentlichungstag der Anmeldung :
**04.10.89 Patentblatt 89/40**

(45) Bekanntmachung des Hinweises auf die
Patenterteilung :
**03.06.92 Patentblatt 92/23**

(84) Benannte Vertragsstaaten :
**AT BE CH DE ES FR GB IT LI NL SE**

(56) Entgegenhaltungen :
**EP-A- 0 145 581**
**US-A- 1 905 770**

(73) Patentinhaber : **Friedrichsfeld**
**Aktiengesellschaft Keramik- und**
**Kunststoffwerke**
**Steinzeugstrasse 50**
**W-6800 Mannheim 71 (DE)**

(72) Erfinder : **Freidel, Norbert**
**Flattacherstrasse 8**
**W-6833 Waghäusel 1 (DE)**

(74) Vertreter : **Klose, Hans, Dipl.-Phys. et al**
**Kurfürstenstrasse 32**
**W-6700 Ludwigshafen (DE)**

EP 0 335 109 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zur Herstellung eines Heizelements gemäß den im Oberbegriff des Patentanspruchs 1 angegebenen Merkmalen. Ferner bezieht sich die Erfindung auf eine Vorrichtung zur Durchführung des Verfahrens. gemäß Oberbegriff des Anspruchs 6.

Aus der EP 145 581 A2, auf welden die Oberbegriff des Anspruche 1 und 6 basieren, ist ein derartiges Verfahren zur Herstellung eines Heizelements bekannt, dessen Heizdraht als eine biflare Spirale gewickelt ist. Der Heizdraht ist mit einem Mantel aus Kunststoff umgeben. Die Herstellung des Heizelements erfolgt mittels einer Vorrichtung, welche eine drehbare Welle und zwei mit der Welle verbundene Platten aufweist. Zwischen diesen beiden Platten ist in axialer Richtung ein Spalt für den Heizdraht vorgesehen, welcher zu Beginn der Herstellung mit einem mittleren Bereich um einen kleinen Dorn nahe der Welle gelegt wird. Nachfolgend wird die Welle gedreht, wobei die zwei Teile des Heizdrahtes nebeneinander in dem genannten Spalt zur bifilaren Spirale gewickelt werden. Der Abstand der einzelnen Windungen zueinander ist durch die Dicke des Mantels aus Kunststoff vorgegeben, wobei die einzelnen Windungen des ummantelten Heizdrahtes radial unmittelbar nebeneinander liegen. Bekanntlich wird bei der Dimensionierung eines Heizelements die Heizleistusng und letztendlich der Windungsabstand insbesondere entsprechend dem zu verschweißenden Material und dem Rohrdurchmesser vorgegeben. Dies bedeutet für die Herstellung, daß eine Vielzahl von Drahtsorten, die im Gesamtdurchmesser, in der Dicke des Kerns des Heizdrahtes und der Ummantelung variieren, vorhanden sein müssen. Insoweit ist ein nicht unerheblicher Aufwand hinsichtlich der Bevorratung unterschiedlicher Drahtsorten erforderlich, wobei auch die Herstellung entsprechend ummantelter Heizdrähte einen entsprechenden Aufwand erfordert. Eine Änderung der Wicklungsabstände, um insbesondere eine Optimierung der einzusetzenden Heizleistung zu erhalten, ist nicht ohne weiteres möglich. Ferner muß der Kunststoff des Mantels auf das Kunststoffteil sowie das Kunststoffrohr abgestimmt sein, wodurch sich in der Praxis weitere Schwierigkeiten ergeben können. Schließlich bedingt der Kunststoffmantel des Heizdrahtes einen entsprechenden Abstand zu dem zu verschweißenden Rohr, sodaß eine entsprechend hohe Schweißenergie zugeführt werden muß.

Ferner ist aus der EP 69 020 B1 ein Heizelement bekannt, welches eine dünne Platte aus Kunststoff enthält, in deren Oberfläche eine spiralförmige Nut für den Heizdraht angeordnet ist. Die Platte weist zwei diametral angeordnete Ansätze auf, um welche die Enden des Heizdrahtes gewickelt sind. Der Heizdraht ist als eine einfache Spirale gewickelt, wobei das eine, innere Ende vom Zentrum der platte radial nach außen zu dem zugeordneten Ansatz geführt ist. Die platte ist mit einer Lasche versehen, welche nach dem Einlegen der Schweißwicklung in die genannte Spiralnut über die Schweißwicklung gelegt wird, wobei schließlich über diese Lasche das innere Ende der Schweißwicklung radial nach außen zu dem genannten Ansatz geführt wird. Mittels dieser Lasche soll ein Kurzschluß beim Schweißen vermieden werden, doch erfordert die Lasche und insgesamt die Fertigung einen zusätzlichen Aufwand. Ferner können sich Schwierigkeiten beim Schweißen ergeben, da es im Bereich des radial nach außen geführten Drahtendes zu einer übermäßigen Erwärmung kommen kann. Es besteht die Gefahr der Lunkerbildung sowie einer verminderten Schweißgüte. Da die spiralförmige Schweißwicklung in der Nut der Kunststoffplatte angeordnet ist, kann der Heizdraht nicht unmittelbar an der Oberfläche des zu verschweißenden Rohres anliegen, sodaß eine entsprechend vergrößerte Heizenergie zugeführt werden muß.

Ferner ist aus der CH-A 528 697 ein elektrisch schweißbares Anbohrformstück bekannt, welches im Spritzgußverfahren hergestellt wird, wobei vor dem Schließen einer Spritzgußform in diese ein ummantelter Widerstandsdraht eingelegt wird. Dieser ummantelte Widerstandsdraht wurde zuvor in eine aus thermoplastischem Werkstoff bestehende platte eingegossen, wobei die Windungen des Widerstandsdrahtes dicht nebeneinander liegen. Der Widerstandsdraht kann als eine einfache Spirale oder als bifilare Spirale gewickelt sein, wobei der Abstand der einzelnen Windungen entsprechend der Wandstärke des Kunststoffmantels definiert ist. Der Windungsabstand kann nicht ohne weiteres verändert oder im Hinblick auf die erforderliche Schweißleistung optimiert werden. Der Fachmann erhält keine Anregung, den Abstand der Windungen zueinander auf einem anderen Wege als entsprechend der Materialstärke des Kunststoffmantels vorzugeben. Ferner weist der Heizdraht aufgrund des Kunststoffmantels zur Oberfläche des zu verschweißenden Rohres einen nicht unerheblichen Abstand auf, sodaß ein relativ hoher Energieeinsatz notwendig ist.

Schließlich ist aus dem deutschen Gebrauchsmuster 85 21 529 ein Anbohrformstück mit einer Heizdrahtmatte bekannt. Zur Herstellung dieser Heizdrahtmatte wird der mit einer Ummantelung aus Kunststoff versehene Heizdraht zick-zack-förmig angeordnet, wobei die einzelnen Teile der Heizdrahtmatte dicht aneinander liegen. Nachfolgend werden die dicht aneinander liegenden Teile des Heizdrahtes miteinander verschweißt. Diese Verschweißung kann nur mit kunststoffummanteltem Heizdraht erfolgen, wobei auch hier der Abstand der einzelnen Teilbereiche des Heizdrahtes von der Wandstärke der Ummantelung abhängt.

Der Erfindung liegt die Aufgabe zugrunde, ein Herstellverfahren anzugeben, das mit geringem Aufwand durchführbar ist und eine rationale Fertigung des Heizelements ermöglicht. Die Herstellung soll mit einem geringen Geräteaufwand und mit geringem Material- und Energieeinsatz durchführbar sein. Das Verfahren soll die Herstellung von Heizelementen ermöglichen, welche eine möglichst große Schweißfläche aufweisen. Die zur Durchführung des Verfahrens dienende Vorrichtung soll eine einfache Konstruktion aufweisen und eine funktionssichere Herstellung der Heizelemente in großen Stückzahlen ermöglichen. Ferner soll die Vorrichtung derart ausgebildet sein, daß mit ihr zuverlässig ein auf die jeweiligen Einsatzbedingungen optimiertes Heizelement hergestellt werden kann.

Das Heizelement soll eine funktionssichere Schweißung ermöglichen, wobei über den Umfang betrachtet eine möglichst gleichmäßige Verteilung der Schweißenergie gewährleistet werden soll. Desweiteren soll ein guter Wärmeübergang gewährleistet werden und die Herstellung des Heizelementes kostengünstig erfolgen.

Die Lösung dieser Aufgabe erfolgt gemäß den im Kennzeichen des Patentanspruchs 1 angegebenen Merkmalen.

Das vorgeschlagene Verfahren ermöglicht eine einfache und zuverlässige Herstellung des Heizelements. Der Heizdraht wird in die bifilare Spiralnut der Spritzgußform eingelegt und mit der gleichen Spritzgußform werden nachfolgend die Verbindungsstege zwischen den einzelnen Windungen des Heizelements hergestellt. Der Abstand der einzelnen Windungen kann ohne Schwierigkeiten den Erfordernissen entsprechend vorgegeben werden, ohne daß hierbei Rücksicht auf einen Durchmesser einer Kunststoffummantelung genommen werden muß. Der Einsatz von Kunststoff ist minimal, wobei durch die Verbindungsstege eine zuverlässige Fixierung der Windungen und Stabilisierung des gesamten Heizelements erreicht wird. Zweckmäßig werden die Drahtenden gemeinsam mit Kontaktstiften auf den radial außen liegenden Enden von zwei dieser Verbindungsstege angeordnet. Das Heizelement zeichnet sich durch eine einfache Konstruktion aus und gewährleistet eine funktionssichere Schweißung. Aufgrund der bifilaren Ausbildung der Spirale wird in einfacher Weise eine Überschneidung oder Überlagerung des Heizdrahtes vermieden. Die Herstellung des Heizelementes erfolgt zweckmäßig mittels einer Spritzgußform, welche zwei koaxiale und ineinandergreifende Spiralnuten aufweist, deren radial innen liegenden Enden miteinander in Verbindung stehen. Ferner weist die Spritzgußform mehrere Verbindungsnuten auf, welche sternförmig über die beiden Spiralnuten hinweggeführt sind. Die Verbindungsnuten weisen erfindungsgemäß eine größere Tiefe als die Spiralnuten auf und dienen zur Erzeugung von Verbindungsstegen zwischen den einzelnen Gängen der bifilaren Spiralen. Schließlich enthält die Spritzgußform Aufnahmebohrungen für Kontaktstifte, die mit dem jeweiligen Ende des Wicklungsdrahtes verbunden werden. Die beiden Aufnahmebohrungen sind zweckmäßig an den radial außen liegenden Enden von zwei Verbindungsnuten angeordnet. So wird in zuverlässiger Weise eine definierte Ausrichtung der Kontaktstifte zu der Schweißwicklung gewährleistet.

Als besonders zweckmäßig hat es sich erwiesen, für das Heizelement Flachdraht vorzusehen. Die längeren Seiten des Flachdrahtes stehen hierbei zur Wicklungsebene der bifilaren Spirale senkrecht. Der Flachdraht weist im Vergleich mit einem Runddraht bei gleichem Querschnitt eine grössere Außenfläche auf, so daß eine gleichmäßige Erwärmung des Kunststoffes erreicht wird. Im Hinblick auf Kurzschlußsicherheit hat sich der Einsatz von lackiertem Draht für das Heizelement als zweckmäßig erwiesen.

Ein weiterer Vorteil des Einsatzes von Flachdraht im Vergleich mit Runddraht besteht darin, daß die Zwischenräume zwischen zwei benachbarten Heizdrähten bzw. Windungen bei Verwendung von Flachdraht größer sind, wobei gleichgroße Querschnittflächen vorausgesetzt werden. Hinzu kommt, daß bedingt durch die beiden sich gegenüberliegenden, relativ großen Oberflächen von benachbarten Windungen eine bessere Durchwärmung des dazwischenliegenden Kunststoffes stattfindet als bei Verwendung von Runddraht. Die Folge davon ist, daß der Abstand zwischen den benachbarten Windungen bei Verwendung von Flachdraht vergrößert werden kannn, was eine weitere Vergrößerung der Zwischenräume zur Folge hat. Damit ergibt sich bei gleich großem Heizelement eine größere Schweißfläche, welche die gesamte Kunststofffläche zwischen den einzelnen Windungen des Heizdrahtes darstellt. Es sei festgehalten, daß als Kunststoff sowohl für die Verbindungsstege als auch für das mit einem Rohr zu verschweißenden Kunststoffteil heute regelmäßig Polyäthylen zum Einsatz gelangt. Die Erfindung wird nicht auf den Einsatz von Polyäthylen beschränkt, sondern es können vergleichbare thermoplastische und zum Verschweißen geeignete Kunststoffe zum Einsatz gelangen. Es sei festgehalten, daß nach der Herstellung des Heizelements dieses in einem nachfolgenden Verfahrensschritt in das Kunststoffteil, sei es eine Anbohrarmatur, ein Sattelstück oder dergleichen, in dieses integriert wird, und zwar durch Einlegen in die Spritzgußform, mittels welcher dann das genannte Kunststoff teil hergestellt wird.

In einer besonderen Ausgestaltung ist der Abstand der Drahtenden an den Kontaktelementen zu den radial innen liegenden Windungen größer als innerhalb der Spirale. Die Kontaktelemente bzw. Kontaktstifte sind in der Anbohrarmatur, dem Sattelstück oder dergleichen fest verankert und halten ihre Position auch beim Schweißen unverändert ein. Hingegen kann beim Schweißen die Heizspirale in dem plastisch bzw. flüssig werdenden Kunststoff aufschwimmen. Aufgrund der vorgeschlagenen Vergrößerung des Abstandes der Drahtenden zur radial nach innen benachbarten Windung der Spirale wird verhindert, daß in diesem Bereich beim Schweißen ein Kurzschluß eintreten könnte.

Weitere wesentliche Ausgestaltungen und Vorteile ergeben sich aus den Unteransprüchen sowie der Beschreibung eines Ausführungsbeispieles.

Die Erfindung wird nachfolgend anhand der Zeichnung näher erläutert. Es zeigen:

Fig. 1 einen Schnitt durch die zur Herstellung des Heizelements vorgesehene Spritzgußform,

Fig 2 eine Aufsicht auf die Spritzgußform in Blickrichtung II gemäß Fig. 1,

Fig. 3 vergrößert die Einzelheit III gemäß Fig. 1,

Fig. 4 einen Schnitt durch das Heizelement,

Fig. 5 eine Ansicht des Heizelements in Blickrichtung V gemäß Fig. 4,

Fig. 6 - 8 schematische Darstellungen zur Erläuterung der Vorteile der Erfindung.

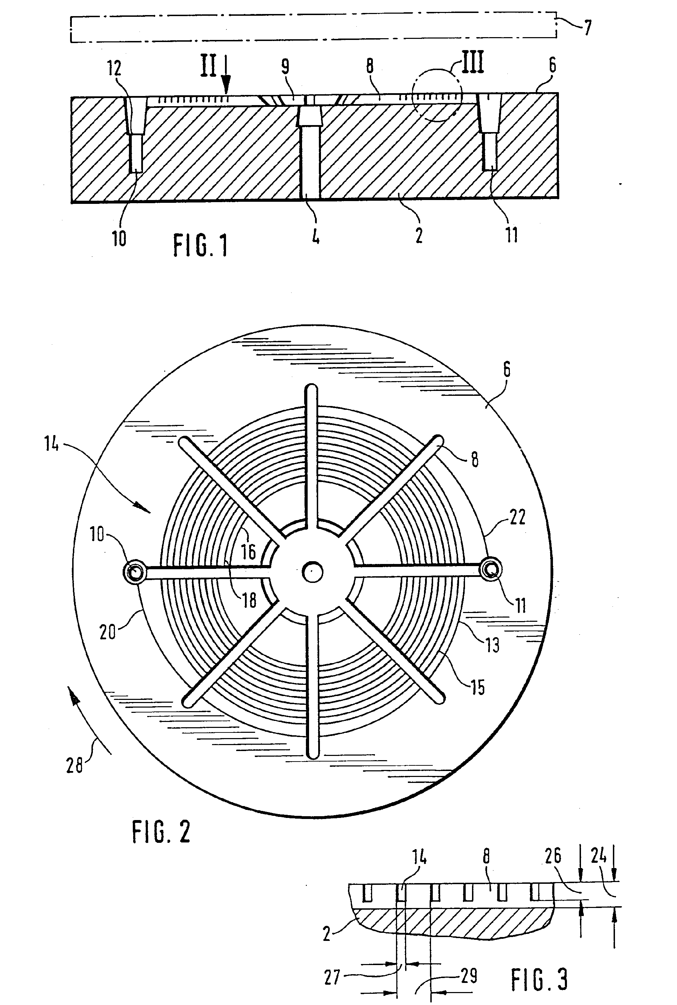

Fig. 1 zeigt schematisch in einem axialen Schnitt eine Spritzgußform 2, die im Zentrum eine axiale Bohrung 4 aufweist, durch welche zum Spritzen in bekannter Weise Kunststoff zuführbar ist. Die Oberfläche 6 wird beim Spritzen mit einem Oberteil 7 abgeschlossen, das als Platte oder dergleichen ausgebildet ist. In der Oberfläche 6 weist die Spritzgußform 2 eine Anzahl radialer, sternförmig angeordneter Verbindungsnuten 8 auf. Die zentrale Bohrung 4 endet in einer kreisförmigen Vertiefung 9 der Oberfläche 6. Diese Vertiefung 9 dient zur Verteilung des durch die Bohrung 4 zugeführten Kunststoffes in die Verbindungsnuten 8, welche in die Vertiefung 9 münden. An den radial außen liegenden Enden der gemäß Fig. 1 geschnittenen Verbindungsnuten 8 sind zwei Aufnahmebohrungen 10 angeordnet. Die Aufnahmebohrungen 10 sind nach oben konisch ausgebildet und enthalten etwa in der Mitte eine Stufe 12. Entsprechend der Stufe 12 weisen die Aufnahmebohrungen 10, 11 einen unteren, wesentlich zylindrischen Teil und ferner einen oberen, sich zur Oberfläche 6 konisch öffnenden Teil auf. Der genannte untere Teil dient zur Aufnahme und definierten Ausrichtung eines einzusetzenden im wesentlichen zylindrischen Kontaktstiftes. Nach dem Einsetzen des Kontaktstiftes ragt dieser teilweise auch in den oberen erweiterten Teil ein und ist dort mit den Enden des Heizdrahtes entsprechend verbunden. Die genannten oberen Teile der Aufnahmebohrungen 10, 11 dienen jeweils zur Herstellung eines Ansatzes, in welchem der Kontaktstift verankert ist. Die Aufnahmebohrungen 10, 11 befinden sich an den Enden jeweils von zwei der Verbindungsnuten 8, so daß beim Spritzen der Kunststoff auch in diese Aufnahmebohrungen 10, 11 gelangen kann und der dort befindliche Kontaktstift sowie den Verbindungsbereich mit dem Drahtende des Heizdrahtes umspritzt wird. Es versteht sich, daß alternativ der Kunststoff auch über eine zentrale Bohrung im Oberteil 7 in die genannte Vertiefung 9 und die Verbindungsnuten 8 geleitet werden kann.

Die Aufsicht gemäß Fig. 2 zeigt in der Oberfläche die bifilare Spiralnut 14. Diese Spiralnut 14 weist also zwei ineinander greifende, koaxiale Spiralen oder Gänge 13, 15 auf, wobei die radial innenliegenden Enden 16, 18 der beiden Gänge 13, 15 in eine der Verbindungsnuten 8 münden. Die radial außen liegenden Enden 20, 22 der beiden Gänge sind hingegen jeweils zu einer der Aufnahmebohrungen 10, 11 geführt. Wie ersichtlich, weisen die Aufnahmebohrungen 10, 11 und die äußeren Enden 20, 22 zu den jeweils radial innen benachbarten Windungen der Spirale einen größeren Abstand auf als im übrigen die einzelnen Windungen.

Fig. 3 zeigt vergrößert den Ausschnitt III gemäß Fig. 1, wobei der rechteckförmige Querschnitt der einzelnen Gänge der bifilaren Spiralnut 14 gut zu erkennen ist. Die radiale Verbindungsnut 8 weist eine Tiefe 24 auf, welche größer ist als die Tiefe 26 der Spiralnut 14. Hierdurch wird die Herstellung von radial durchgehenden Verbindungsstegen mittels den Verbindungsnuten 8 ermöglicht. Die Tiefe 26 der Nut 14 ist größer als die Breite 27. Die Nut 14 dient zur Aufnahme des Heizdrahtes mit rechteckförmigem Querschnitt und der Heizdraht wird nachfolgend auch als Flachdraht bezeichnet. Die Querschnittsfläche des Flachdrahtes ist zweckmäßig in der Weise kleiner ausgebildet, daß der Flachdraht leicht-gängig in die Spiralnut 14 eingelegt werden kann. Nach dem Einlegen des Flachdrahtes liegt dieser mit seiner einen schmalen Seitenfläche auf dem Nutboden an, wobei die andere kurze Seitenfläche im wesentlichen auf der gleichen Höhe wie die Oberfläche 6 der Spritzgußform 2 liegt. Nach dem Ausspritzen umgreift der Kunststoff des Verbindungssteges den Flachdraht an den beiden längeren Außenseiten. Der radiale Abstand 29 benachbarter Windungen kann entsprechend der geforderten Heizleistung und/oder weiterer Schweißbedingungen, beispielsweise den Materialeigenschaften des Kunststoffteiles und des zu verschweißenden Rohres, vorgegeben werden. Der Abstand 29 ist um einen vorgebbaren Faktor größer als die Breite 27 der Spiralnut 14. Der Abstand 29 ist zweckmäßig um einen Faktor zwischen 2-8 und insbesondere zwischen 3-6 größer als die Nutbreite 27.

Bei Beginn der Herstellung eines Heizelementes wird zunächst das eine Ende des Heizdrahtes, der einen rechteckförmigen Querschnitt aufweist und als Flachdraht ausgebildet ist, mit einem hier nicht weiter dargestellten Kontaktstift verbunden. Die Verbindung erfolgt zweckmäßig durch Wire-Wrapping. Der Kontaktstift wird beispielsweise in die Aufnahmebohrung 10 eingesetzt. Der Heizdraht wird gemäß Fig. 2 vom äußeren Ende 20 beginnend in den ersten Gang 13 der bifilaren Spirale 14 eingelegt. Hierbei erfolgt eine Relativdrehung der Spritzgußform 2 bezüglich einer hier nicht weiter dargestellten Zufuhreinrichtung für den Heizdraht, und zwar in Richtung des Pfeiles 28. Diese Drehung wird beendet, wenn der Heizdraht das radial innen liegende Ende 16 an der dortigen radialen Verbindungsnut 8 erreicht hat. In der Verbindungsnut 8 wird der Draht dann in das innere Ende 18 des andere Ganges der bifilaren Spiralnut 14 umgelegt. Nachfolgend wird die Drehrichtung umgekehrt, bis das andere äußere Ende 22 erreicht wird. Nunmehr wird mit dem Drahtende der andere Kontaktstift verbunden, welcher in die Aufnahmebohrung 11 eingesetzt wird. Nach dem Schließen der Spritzgußform, also nach dem Auflegen des Oberteils 7 auf die Oberfläche 6 unter Zuhilfenahme geeigneter Bewegungs- und Verbindungsmittel, wird Kunststoff durch die zentrale Bohrung 4 zugeführt und in die Verbindungskanäle 8 bis hin zu den beiden Aufnahmebohrungen 10, 11 verteilt. Unter Einwirkung von Wärme und/oder Druck wird der in der Spiralnut befindliche Heizdraht im Bereich der Verbindungsnuten 8 zumindest teilweise vom Kunststoff umschlossen und in diesen eingebettet. Nach dem Erkalten und Öffnen der Spritzgußform kann das Heizelement herausgenommen werden.

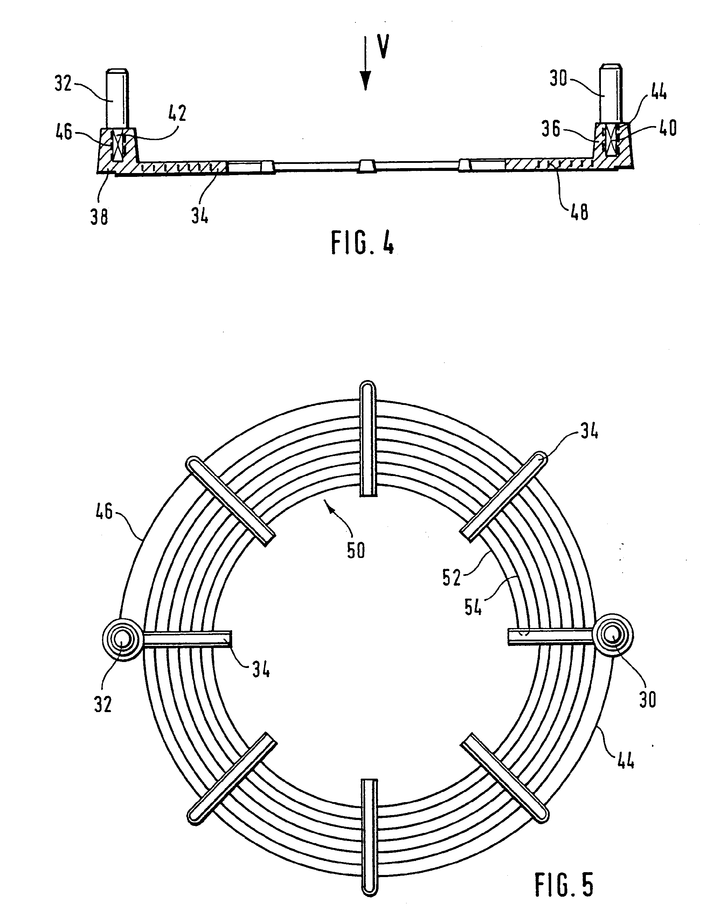

Fig. 4 zeigt einen Schnitt durch das fertige Heizelement, wobei nunmehr auch die beiden Kontaktstifte 30, 32 zu erkennen sind. Die Schnittebene verläuft durch radiale Verbindungsstege 34, die radial außen je einen Ansatz 36, 38 aufweisen. In den genannten Ansätzen 36, 38 sind die vorstehend bereits erwähnten Kontaktstifte 30, 32 mit ihren Unterteilen 40, 42 verankert. Diese Unterteile 40, 42 weisen einen rechteckförmigen Querschnitt auf und sind durch Wire-Wrapping mit den Enden 44, 46 des Heizdrahtes 48 verbunden.

Fig. 5 zeigt eine Aufsicht auf das Heizelement, wobeinunmehr die insgesamt acht radialen Verbindungsstege 34 ebenso wie die Kontaktstifte 30, 32 und die bifilare Wicklung 50 des Heizdrahtes 48 gut zu erkennen sind. Die Kontaktstifte 30, 32 sind diametral gegenüberliegend außen an zwei der genannten Verbindungsstege 34 in den dort vorgesehenen Ansätzen 36, 38 angeordnet. Desweiteren sind die inneren Enden 52, 54 der beiden Teile der bifiralen Wicklungsspirale 50 zu erkennen. Es sei ausdrücklich festgehalten, daß die beiden genannten Enden 52, 54 aus dem gleichen Draht einfach durch Umbiegen bzw. Umkehren der Drehrichtung beim Einlegen in die Spritzgußform erzeugt sind. Die äußeren Drahtenden 44, 46 und entsprechend die Kontaktstifte 30, 32 weisen zur radial nach innen benachbarten nächsten Windung einen vergrößerten Abstand auf, damit beim Schweißen ein Kurzschluß infolge des Aufschwimmens der Wicklung 50 vermieden wird.

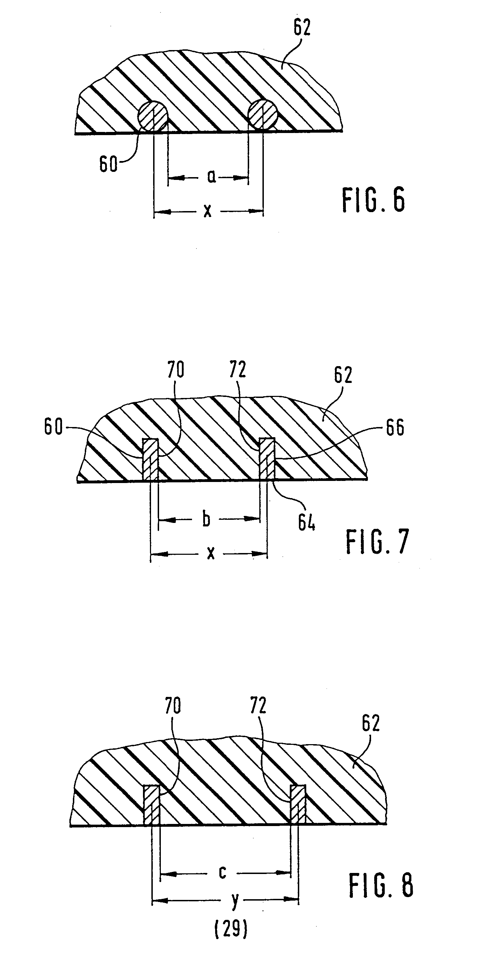

Anhand der Fig. 6 - 8 sollen die durch den Einsatz von Flachdraht im Vergleich mit Runddraht erzielbaren Vorteile erläutert werden. Es sei zunächst davon ausgegangen, daß bei Ausbildung des Heizdrahtes mit kreisringförmiger Querschnittsfläche die Windungen zueinander einen Abstand x aufweisen, wobei ein Abstand a gemäß Fig. 6 eingehalten wird. Der Einfachheit halber sind hier nur zwei Windungen des Heizdrahtes des Heizelementes dargestellt, welches bereits in den Kunststoff des zu verschweißenden Kunststoffteils 62 eingebettet ist. Wie bereits ausgeführt, wird das erfindungsgemäß gefertigte Heizelement beim Herstellen des Kunststoffteiles in dessen Kunststoff vollständig eingebettet.

Fig. 7 zeigt ähnlich Fig. 6 zwei benachbarte Windungen des nunmehr als Flachdraht mit rechteckförmigem Querschnitt ausgebildeten Heizdrahtes. Die Querschnittsfläche soll die gleiche sein wie bei dem Runddraht gemäß Fig. 6. Der Flachdraht ist in der Weise gewickelt, daß die kurzen Seitenkanten 64 parallel zur Wicklungsebene liegen, während die längeren Seitenkanten 66 orthogonal zur Wicklungsebene liegen. Bei gleichem Mittenabstand x der benachbarten Windungen ist nunmehr der Abstand b zwischen den gegenüberliegenden Oberflächen 70, 72 ersichtlich größer als der entsprechende Abstand a beim Runddraht gemäß Fig. 6. Da ferner die genannten Oberflächen 70, 72 größer sind als beim Runddraht wird der zwischen diesen Oberflächen 70, 72 liegende Kunststoff besser erwärmt als beim Runddraht. Infolgedessen kann (Fig. 8) zwischen den benachbarten Windungen ein vergrößerter Abstand y vorgegeben werden, so daß auch der Abstand c des Zwischenraumes zwischen benachbarten Windungen entsprechend vergrößert wird. Wie ersichtlich, kann daher durch den Einsatz von Flachdraht bei im übrigen gleich großem Heizelement eine gegenüber Runddraht vergrößerte Schweißfläche erreicht werden; als Schweißfläche wird hierbei die Summe aller durch Kunststoff ausgefüllten Flächen zwischen den einzelnen Windungen des Heizdrahtes bezeichnet. Der Abstand c gemäß Fig. 8 ist größer als der Abstand b gemäß Fig. 7, wobei der Abstand b seinerseits größer ist als der Abstand a gemäß Fig. 6.

Bezugszeichen

2 Spritzgußform
4 zentrale Bohrung
6 Oberfläche
7 Oberteil
8 Verbindungsnut
9 Vertiefung
10, 11 Aufnahmebohrung
12 Stufe
13, 15 Windungsgang

14 Spiralnut

16, 18 inneres Ende der Windungsgänge der Spiralnut

20, 22 äußeres Ende

24 Tiefe von 8

26 Tiefe von 14

27 Nutbreite

28 Pfeil

29 Abstand der Windungen

30, 32 Kontaktstift

34 Verbindungssteg

36, 38 Ansatz

40, 42 Endteil

44, 46 äußeres Drahtende

48 Heizdraht

50 Wicklung

52, 54 inneres Drahtende

60 Fläche

62 Kunststoffteil

64 kurze Seitenkante

66 lange Seitenkante

70, 72 Oberfläche

**Patentansprüche**

1. Verfahren zur Herstellung eines Heizelements, welches in einem Kunststoffteil anzuordnen ist und zum Verschweißen dieses Kunststoffteils mit einem Kunststoffrohr dient, enthaltend einen als bifilare Spirale (14) gewickelten Heizdraht (48) mit radial außenliegenden Drahtenden (44, 46), über welche Strom zuführbar ist, dadurch gekennzeichnet, daß der Heizdraht (48) in eine bifilare Spiralnut (14) in einer Oberfläche (6) einer Spritzgußform (2) eingelegt wird, wobei entsprechend dem radialen Abstand der Windungen der Spiralnut (14) auch die Windungen des Heizdrahtes (48) beabstandet angeordnet werden, und daß nach dem Verschließen der Spritzgußform (2) Kunststoff in bevorzugt radiale Verbindungsnuten (8) zwischen den Windungen der Spiralnut (14) eingeleitet wird, wobei der Kunststoff im Bereich der Verbindungsnuten (8) den Heizdraht (48) zumindest teilweise umgibt.

2. Verfahren nach Anspruch 1, dadurch gekennzeichnet, daß als Heizdraht (48) ein bevorzugt lackierter Flachdraht derart in die Spiralnut (14) eingelegt wird, daß die längeren Seiten des Flachdrahtes orthogonal zur Wicklungsebene liegen.

3. Verfahren nach Anspruch 1 oder 2, dadurch gekennzeichnet, daß das eine Heizdrahtende (44) in eine radial außen angeordnete Aufnahmebohrung (10) der Spritzgußform (2) eingesetzt wird, daß nachfolgend der Heizdraht (48) in einen ersten Gang (13) der bifilaren Spiralnut (14) eingelegt wird, daß nach Erreichen des radial innenliegenden Endes (16) des ersten Ganges (15) der Heizdraht (48) in das radial innenliegende Ende (18) des anderen Ganges der Spiralnut (14) umgebogen wird und daß nach dem Einlegen des Heizdrahtes (48) in den genannten anderen Gang der Spiralnut (14) das äußere Drahtende (46) in eine zweite Aufnahmebohrung (11) der Spritzgußform (2) eingesetzt wird.

4. Verfahren nach einem der Ansprüche 1 bis 3, dadurch gekennzeichnet, daß zunächst an dem ersten Drahtende (44) des Heizdrahtes (48) ein Kontaktstift (30) befestigt wird und daß nach dem Einlegen des Heizdrahtes (48) in die Spiralnut (14) am anderen Drahtende (46) ein weiterer Kontaktstift (32) befestigt wird.

5. Verfahren nach einem der Ansprüche 1 bis 4, dadurch gekennzeichnet, daß das Umlegen des Heizdrahtes (48) an den inneren Enden (16, 18) der beiden Gänge der Spiralnut (14) im Bereich einer radialen Verbindungsnut (8) erfolgt, und/oder daß beim Einlegen des zuzuführenden Heizdrahtes (48) die Spritzgußform (2) um eine, bevorzugt durch die zentrale Bohrung (4) verlaufende Achse zunächst in einer ersten Richtung (28) gedreht wird und nach dem Umlegen des Heizdrahtes (48) an den genannten inneren Enden (16, 18) in einer der ersten Richtung entgegengesetzten Richtung gedreht wird.

6. Vorrichtung zur Durchführung des Verfahrens nach einem der Ansprüche 1 bis 5, wobei das in einem Kunststoffteil anzuordnende Heizelement zum Verschweißen dieses Kunststoffteils mit einem Kunststoffrohr dient und einen Heizdraht (48) enthält, welcher mittels einer Platte zu einer bifilaren Spirale (14) gewickelt wird und über dessen radial außen liegenden Drahtenden (44, 46) Strom zuführbar ist, dadurch gekennzeichnet, daß die Platte als eine Spritzgußform (2) ausgebildet ist und in ihrer Oberfläche (6) eine bifilare Spiralnut (14) aufweist, welche von einer Anzahl radialer Verbindungsnuten (8) durchschnitten wird, deren Tiefe (24) bevorzugt größer ist als die Tiefe (26) der Spiralnut (14).

7. Vorrichtung nach Anspruch 6, dadurch gekennzeichnet,
daß die beiden äußeren Enden (20, 22) der Spiralnut (14) jeweils in einer Aufnahmebohrung (10, 11) enden, in welche die äußeren Drahtenden (44, 46) des Heizdrahtes (48) zusammen mit einem Kontaktstift (30, 32) einsetzbar sind, und/oder daß die beiden Aufnahmebohrungen (10, 11) am radial äußeren Ende von zwei der Verbindungsnuten (8) angeordnet sind.

8. Vorrichtung nach Anspruch 6 oder 7, dadurch gekennzeichnet,
daß die beiden radial inneren Enden (16, 18) der bifilaren Spiralnut (14) miteinander in Verbindung stehen, und zwar insbesondere über eine der radialen Verbindungsnuten (8).

9. Vorrichtung nach einem der Ansprüche 6 bis 8, dadurch gekennzeichnet, daß die Spritzgußform (2) eine zentrale Bohrung (4) aufweist, in welche die Verbindungsnuten (8) bevorzugt über eine Vertiefung (9) münden, welche in der Oberfläche (6) am Ende der Bohrung (4) angeordnet ist.

10. Vorrichtung nach einem der Ansprüche 6 bis 9, dadurch gekennzeichnet, daß die Aufnahmebohrungen (10, 11) zur radial nach innen benachbarten Windung der Spiralnut (14) einen größeren Abstand aufweisen, als die übrigen Windungen zueinander und/oder daß der Abstand der radial außenliegenden Teile der Spiralnut (14) zur radial nach innen benachbarten Windung in Richtung zur jeweiligen Aufnahmebohrung (10, 11) im wesentlichen kontinuierlich zunimmt, und zwar bevorzugt über einen Winkelbereich von wenigstens 45°.

## Claims

1. A process for producing a heating element which is to be arranged in a plastic part and used to weld the plastic part to a plastic pipe, comprising a heating wire (48) wound as a bifilar spiral (14) with radially outwardly extending wire ends (44, 46) through which current can be supplied,
characterised in that
the heating wire (48) is placed in a bifilar spiral groove (14) in a surface (6) of an injection mould (2) with the windings of the heating wire (48) spaced a distance corresponding to the radial spacing of the windings of the spiral groove (14), and after the injection mould (2) has been closed, plastic is introduced into preferably radial connecting grooves (8) between the windings of said spiral groove (14) so that the plastic at least partially surrounds the heating wire (48) in the vicinity of said connecting grooves (8).

2. A process according to claim 1, characterised in that a preferably enamelled flat wire is placed into the spiral groove (14) as heating wire (48) in such a way that the longer sides of the flat wire are orthogonal to the winding plane.

3. A process according to claim 1 or 2, characterised in that one heating wire end (44) is disposed in a radially outer receiving bore (10) of said injection mould (2), said heating wire (48) is subsequently arranged in a first turn (13) of said bifilar spiral groove (14), after reaching the radially inner end (16) of said first turn (15) the heating wire (48) is bent around into the radially inner end (18) of the other turn of said spiral groove (14), and after insertion of said heating wire (48) into said other turn of said spiral groove (14), the outer wire end (46) is inserted into a second receiving bore (11) in said injection mould (2).

4. A process according to one of claims 1 to 3, characterised in that a contact pin (30) is first fastened to the first wire end (44) of said heating wire (48), and after insertion of said heating wire (48) into said spiral groove (14), a further contact pin (32) is fastened to the other wire end (46).

5. A process according to one of claims 1 to 4, characterised in that the bending around of the heating wire (48) takes place at the inner ends (16, 18) of the two turns of the spiral groove (14) in the vicinity of a radial connecting groove (8), and/or that, during insertion of said heating wire (48), the injection mould (2) is first rotated about an axis in a first direction, preferably extending through the central bore (4), and after the bending around of said heating wire-(48) at said inner ends (16, 18), the mould is rotated in a direction opposite to said first direction.

6. An apparatus for carrying out the process according to one of claims 1 to 5, wherein the heating element to be arranged in a plastic part is used to weld the plastic part to a plastic pipe and comprises a heating wire (48) which is wound by means of a plate to form a bifilar spiral (14) with radially outwardly extending wire ends (44, 46) through which current can be supplied, characterised in that
the plate is in the form of an injection mould (2) and in its surface (6) has a bifilar spiral groove (14) which is intersected by a number of radial connecting grooves (8) the depth (24) of which is preferably greater than the depth (26) of the spiral groove (14).

7. An apparatus according to claim 6, characterised in that
the two outer ends (20, 22) of the spiral groove (14) each terminate in a receiving bore (10, 11) into which the outer wire ends (44, 46) of the heating wire (48) can be inserted together with a contact pin (30, 32), and/or the two receiving bores (10, 11) are arranged at the radially outer end of two of the connecting grooves (8).

8. An apparatus according to claim 6 or 7, characterised in that the two radially inner ends (16, 18) of the bifilar spiral groove (14) are connected with each other, more particularly via one of the radial connecting grooves (8).

9. An apparatus according to one of claims 6 to 8, characterised in that the injection mould (2) has a central bore (4) into which the connecting grooves (8) open, preferably via a depression (9) arranged in the surface (6) at the end of the bore (4).

10. An apparatus according to one of claims 6 to 9, characterised in that the receiving bores (10, 11) are spaced a greater distance from the radially inwardly adjacent winding of the spiral groove (14) than the other windings are spaced from one another, and/or the distance of the radially outer parts of the spiral groove (14) from the radially inwardly adjacent winding increases substantially continuously in the direction of the respective receiving bore, preferably over an angular range of at least 45°.

## Revendications

1. Procédé de fabrication d'un élément chauffant qui est disposé dans une pièce de matière plastique et sert à souder cette pièce de matière plastique à un tube de matière plastique, renfermant un fil chauffant (48) enroulé en une spirale bifilaire (14), et présentant des extrémités (44, 46) situées radialement à l'extérieur par l'intermédiaires desquelles le courant peut être amené,
*caractérisé en ce qu'*
on met le fil chauffant (48) en place dans une rainure spirale bifilaire (14) ménagée dans une surface (6) d'un moule d'injection (2), les spires du fil chauffant (48) étant espacées d'une distance qui correspond à l'écartement radial des spires de la rainure spirale ( 14), *et en ce que*, après la fermeture du moule d'injection (2), on introduit une matière plastique dans des rainures de liaison (8), de préférence radiales, comprises entre les spires de la rainure spirale (14), la matière plastique entourant alors du moins partiellement le fil chauffant (48) dans la région des nervures de liaison (8).

2. Procédé selon la revendication 1, *caractérisé en ce que*, en qualité de fil chauffant (48), on met en place dans la rainure spirale (14), un fil plat, de préférence laqué, que l'on dispose de manière que les grands côtés du fil plat soient disposés perpendiculairement au plan d'enroulement.

3. Procédé selon la revendication 1 ou 2, *caractérisé en ce qu'*on dispose l'une (44) des extrémités du fil chauffant dans un perçage récepteur (10) du moule d'injection (2) qui est disposé radialement à l'extérieur que, ensuite, on place le fil chauffant (48) dans une première spire (13) de la rainure spirale bifilaire (14), en ce que, lorsqu'on a atteint l'extrémité radialement intérieure ( 16) de la première spire ( 15), on recourbe le fil chauffant (48) pour le placer dans l'extrémité radialement intérieure (18) de l'autre spire de la rainure spirale ( 14) et en ce que, après avoir mis le fil chauffant (48) en place dans l'autre spire précitée de la rainure spirale (14), on met l'extrémité extérieure (46) du fil dans un deuxième perçage récepteur (11) du moule d'injection (2).

4. Procédé selon une des revendications 1 à 3, *caractérisé en ce que,* tout d'abord, on fixe une broche de contact (30) à la première extrémité (44) du fil chauffant (48) et en ce que, après avoir mis le fil chauffant (48) dans place dans la rainure spirale (14), on fixe une autre broche de contact (32) à l'autre extrémité (46) du fil.

5. Procédé selon une des revendications 1 à 4, *caractérisé en ce que* le retournement du fil chauffant (48) s'effectue aux extrémités intéreures (16, 18) des deux spires de la rainure spirale (14), dans la région d'une rainure de liaison radiale (8) et/ou en ce que, lors de la mise en place du fil chauffant (48) à acheminer, on fait tourner initialement le moule d'injection (2) dans un premier sens (28) autour d'un axe qui passe de préférence par le perçage central (4), et qu'après le retournement du fil chauffant (48) aux extrémités intérieures précitées (16, 18), on fait tourner le moule dans un sens opposé au premier sens.

6. Dispositif pour la mise en oeuvre du procédé selon une des revendications 1 à 5, dans lequel l'élément chauffant, qui doit être placé une pièce de matière plastique, sert à souder cette pièce de matière plastique à un tube de matière plastique, et renferme un fil chauffant (48) qui est enroulé au moyen d'une plaque pour former une spirale bifilaire (14), et qu'un courant peut être acheminé à ce fil en passant par les extrémités (44, 46) du fil qui sont situées radialement à l'extérieur, *caractérisé en ce que* la plaque constitue un moule d'injection (2) et présente dans sa surface (6) une rainure spirale bifilaire (14) qui est coupée par un certain nombre de nervures de liaison radiales (8) dont la profondeur (24) est de préférence supérieure à la profondeur (26) de la rainure spirale (14).

7. Dispositif selon la revendication 6, *caractérisé en ce que*

les deux extrémités extérieures (20, 22) de la rainure spirale (14) se terminent chacune dans un perçage récepteur (10, 11) dans lequel les extrémités extérieures (44, 46) du fil chauffant (48) peuvent être logées en même temps qu'une broche de contact (30, 32) et/ou que les deux perçages récepteurs (10, 11) sont disposés à l'extrémité radialement extérieure de deux des rainures de liaison (8).

8. Dispositif selon la revendication 6 ou 7, *caractérisé en ce que*
les deux extrémités radialement intérieures (16, 18) de la rainure spirale bifilaire (14) sont en liaison entre elles, plus précisément par l'intermédiaire d'une des deux rainures de liaison radiales (8).

9. Dispositif selon une des revendications 6 à 8, *caractérisé en ce que* le moule d'injection (2) présente un perçage central (4) dans lequel les rainures de liaison (8) débouchent de préférence par l'intermédiaire d'un renfoncement (9) qui est disposé dans la surface (6), à l'extrémité du perçage (4).

10. Dispositif selon une des revendications 6 à 9, *caractérisé en ce que* les perçages récepteurs (10, 11) sont situés à une distance de la spire de la rainure spirale (14) qui leur est adjacente radialement vers l'intérieur qui est supérieure à la distance d'écartement mutuel des autres spires et/ou en ce que la distance entre les parties extérieures de la rainure spirale (14) et la spire qui leur est adjacente radialement vers l'intérieur croît sensiblement progressivement en direction du perçage récepteur (10, 11) correspondant, et ceci de préférence sur une région angulaire d'au moins 45°.

FIG.1

FIG. 2

FIG.3

V

32  42  46  38  34

FIG. 4

30  44  36  40  48

46  34  32

50  52  54  34

30  44

FIG. 5

FIG. 6

FIG. 7

(29)

FIG. 8

12